# EUROPEAN PATENT SPECIFICATION

(11) **EP 1 633 195 B1**
(45) Date of publication and mention of the grant of the patent: **21.12.2011**
(21) Application number: 04735764.5
(22) Date of filing: 02.06.2004
(51) Int. Cl.: A21D 10/00, A21D 2/22, A21D 8/04, A21D 2/18, A23L 3/3571, A23L 3/3481

(54) **LIQUID DOUGH CONDITIONER**
FLÜSSIGES TEIGVERBESSERUNGSMITTEL
STABILISATION AQUEUSE D'UNE COMPOSITION LIQUIDE DE CONDITIONNEMENT D'UNE PATE DE CUISSON

(30) Priority: 02.06.2003 GB 0312606
(43) Date of publication of application: 15.03.2006
(73) Proprietor: Cereform Limited, London SW1X 7LQ (GB)
(72) Inventor: GREEN, Matthew, Newport Pagnell, Bucks MK16 9DU (GB); WHITEHURST, Robert, Horton, Northampton NN7 2BL (GB)
(74) Representative: Turner, Craig Robert
(86) International application number: PCT/GB2004/002323
(87) International publication number: WO 2004/105494

(56) References cited:
- WO-A-96/13980
- WO-A-02/060262
- WO-A-03/039261
- US-A- 3 595 671
- US-A- 3 934 040
- US-A1- 2004 076 716
- US-B1- 6 251 444

## Description

The present invention relates to liquid compositions for performing a stabilizing function and a dough conditioning function, and to a process for the preparation of a dough using said improving compositions and also to a process for the preparation of a baked product using such a dough.

It will be well understood by a person skilled in the art that the dough conditioners (i.e. bread improvers) typically used in the preparation of baked dough products are generally provided in a dry form (e.g. powder or tablet form) or as an emulsifier based liquid composition comprising a lipid carrier. A problem associated with both these forms of dough conditioner is that they are relatively difficult to pump and dose which, in turn, complicates their use in the mass production of dough and baked dough products. Furthermore, dry forms of dough conditioner can result in a dusting effect which can cause allergic reactions. Also, oil based conditioners undesirably increase the fat content of a product and, additionally, the emulsifier content tends to thicken the fluid, cause instability at temperatures above 35°C, and result in excessive viscosity at temperatures below 10°C.

Aqueous compositions are perhaps a preferred form of dough conditioner inasmuch as their carrier (water) is inexpensive, low fat and results in a non-dusting product. Aqueous solutions of dough conditioner may also be readily pumped and dosed allowing for a convenient mass production of dough products. However, aqueous solutions or suspensions of a dough conditioner are unstable due to denaturation/decomposition of the ascorbic acid (used as an oxidant) and enzyme systems used as the active ingredients. This instability also tends to increase with ambient temperature. Due to minimum shelf life requirements, use of aqueous compositions of dough conditioners has not in the past been practical. Nevertheless, in WO 02/26044 A2, a liquid bread improving composition comprising one or more polyols in an aqueous solution is disclosed. The polyols lower water activity to such an extent that the processes which inactivate enzymes and degrade ascorbic acid and microbial infections are slowed. As a result, the shelf life of the composition is increased.

WO96/13980 discloses liquid bread improver compositions. WO03/039261 discloses a liquid bread improver comprising antioxidants, oxidants, reducing agents, enzymes, flavourings, hydro-colloid emulsifier, and/or soy flour. WO02/060262 discloses a bread conditioner comprising soy protein, sodium stearoyl lactylate, xylanase, ascorbic acid, alpha-amylase, cellulase and azodicarbonamide. US3934040 discloses a yeast leavened bread dough comprising normal dough ingredients, and an additive consisting essentially of L-cysteine, ascorbic acid and enzymes. US6251444 discloses a dough comprising flour, water, yeast, sugar, salt, shortening ascorbic acid, L-cysteine and enzymes. US2004/076716 describes a dough composition suitable for baking into yeast-fermented bread products.

It is an object of the present invention to provide improved aqueous compositions of dough conditioners, and associated products, and a process for preparing the same.

A first aspect of the present invention provides A liquid dough conditioning composition comprising one or more enzymes, an oxidant and a water soluble antioxidant; characterised by further comprising salt in a quantity of between 30 wt% and 36 wt% or sugar in a quantity of between 40 wt% and 70 wt%, or sugar in a quantity of between 10 wt% and 40 wt% and salt in a quantity of between 10 wt% and 40 wt%.

Ideally, the water soluble antioxidant is sulphur dioxide or sulphur dioxide generating. Preferable the water soluble antioxidant is sodium metabisulphite.

The composition may be characterised by a sodium metabisulphite content of up to 1.0 wt %. Furthermore, the composition may be characterised by a sodium metabisulphite content of approximately 0. 1 wt %.

Also, the composition may ideally comprise a water soluble alkali, preferably sodium hydroxide. The composition may also comprise a hydrocolloid, an emulsifier (e. g. sodium stearoyl lactylate), a polysaccharide (e. g. starch), or other means for increasing the viscosity of the composition. The emulsifier should be of a food grade. The hydrocolloid may be Xanthan gum. Said one or more enzymes may comprise lipase and said oxidant (i. e. oxidising agent) is ideally ascorbic acid.

A second aspect of the present invention provides a process for preparing the aforementioned liquid composition, wherein the water soluble antioxidant is added to water before the oxidant is added to said water. The water ideally comprises dissolved sugar and/or dissolved salt (which is preferably added to the water before the addition of said antioxidant). After said water soluble antioxidant is added (and preferably after the oxidant is added), it is preferable for a water soluble alkali, ideally sodium hydroxide solutions, to be added. The alkali may be added so as to increase pH to approximately 3.0 to 8.0, preferably 4.0 to 5.0, and more preferably to 4.5. Preferably, after said alkali is added, one or more enzymes are added. Also, after said one or more enzymes are added, it is preferable for a hydrocolloid to be added. The oxidant may be ascorbic acid.

A third aspect of the present invention relates to use of a water soluble antioxidant to stabilise a liquid dough conditioning composition comprising one or more enzymes; an oxidant which is ascorbic acid, salt in a quantity of between 30 wt% and 36 wt% or sugar in a quantity of between 40 wt% and 70 wt%, or sugar in a quantity of between 10 wt% and 40 wt% and salt in a quantity of between 10 wt% and 40 wt%..

A dough can be prepared by mixing flour, yeast, water and an effective quality of any of the aforementioned compositions.

A fourth aspect of the present invention provides a process for preparing a dough comprising mixing flour, yeast, water and an effective quantity of any of the aforementioned compositions. This process ideally comprises the step of separately adding a fluidised emulsifier (ideally as specifically mentioned herein) to said mix of flour, yeast, water and quantity of composition. A baked product can be prepared by baking the aforementioned dough or by the aforementioned process according to the fifth aspect of the present invention.

A fifth aspect of the present invention relates to use of the aforementioned liquid composition, according to the first aspect of the present invention, for the preparation of a dough and any product baked therefrom.

An embodiment of the present invention will now be described.

A 0.25% aqueous solution of dough conditioner may be prepared in accordance with the present invention by first adding sugar, salt and sodium metabisulphite to water. As an alternative to sodium metabisulphite, one of the following may be used: sulphur dioxide, sodium sulphite, sodium hydrogen sulphite, potassium metabisulphite, calcium sulphite and calcium hydrogen sulphite. When selecting the antioxidant, regard should of course be had to local legislation on food additives. The sugar, salt and sodium metabisulphite are dissolved in the water by stirring. The sugar and salt may each be added in the quantity of 10-40 wt %. However, in trials, a solution has been used with 23 wt % sugar, 20 wt % salt and 57 wt % water. Alternatively, either the salt or the sugar may be omitted. In this case, where just salt is used, a quantity of 30-36 wt% is preferable, with 36 wt % as the ideal. However, where sugar alone is used, the quantity is 40-70 wt %, with 60 wt % as the ideal. The sodium metabisulphite is added in a quantity of approximately 0.1 wt % (of the final liquid composition ready for use).

Once the sodium metabisulphite has been dissolved in the solution, the ascorbic acid may then be added and dissolved with stirring. It is important that the sodium metabisulphite is added prior to the ascorbic acid being added so as to ensure that the sodium metabisulphite can have an oxygen scavenging effect on the water and thereby reduce degradation of the ascorbic acid. The pH of the sodium metabisulphite and ascorbic acid solution will be approximately 1.0 to 3.0.

This value should be verified as necessary using a calibrated pH meter. The pH of the solution is then adjusted to the value of 3.0 to 8.0 (preferably 4. 0 to 5.0 and more preferably 4.5) by adding sodium hydroxide solution (or any other suitable food grade water soluble alkali). The required enzymes are then added and thoroughly stirred into the solution. Suitable enzymes will be apparent to the skilled reader. It is, however, particularly desirable to use one or more enzymes selected from a group consisting of lipase, lipoxygenase, amylase, hemicellulase, maltogenic amylase, phospholipase, beta-glucanase, amyloglucosidase, glucose oxidase, hexose oxidase laccase and transglutaminase. The enzymes lipase and phospholipase have particular efficacy in relation to the present invention. A hydrocolloid (for example, Xanthan gum) is then added and the solution is stirred until a smooth gel is formed. The solution is ideally mixed with a high shear mixer.

The resultant aqueous fluid may then be stored at or below room temperature for later use as a dough conditioner (bread improving composition).

Indeed, in tests of the composition, it was found that bread baked with dough comprising a six month old sample of composition was within acceptable parameters. More specifically, bread was baked from a dough mixed with directly added ascorbic acid and enzymes (the control mixture) and from a dough mixed with the 0.25 wt % dough conditioner aqueous fluid (the test mixture). This was repeated periodically as the aqueous fluid aged at room temperature over a six month period. The ingredients for the control and test mixtures are as follows:

| Ingredient | Weight/g | Weight/g |
|---|---|---|
| | **Control Mixture** | **Test Mixture** |
| Wheat flour | 3000 | 3000 |
| Salt | 60 | 60 |
| Yeast | 75 | 75 |
| Soya flour | 30 | 30 |
| Water | 1890 | 1890 |
| Aqueous fluid | - | 7.5 |
| Ascorbic acid | 0.3831 | - |
| Enzymes | 0.66 | - |
| Aqueous carrier | 7.5 | - |

The dough was mixed in a high speed mixer using 11 watt hrs/kg.
The mixer was operated using a vacuum with a 60 second delay.
The dough was proved to 10mm from the top of the bread tin.
The bread was baked @500°F for approximately 25 minutes.

Bread was first baked from the control and text mixtures on the day following preparation of the test mixture. No significant differences between the bread of the control mixture and the bread of the test mixture were found. When bread was prepared from dough comprising approximately six month old aqueous fluid, bread quality was found acceptable when compared to bread baked from a fresh control mixture.

It will be understood by the skilled person that the sugar and salt in the aqueous fluid serves to protect the enzymes and preserve microbiologically the entire solution. It will also be understood that there is a tendency for the ascorbic acid to oxidise with oxygen in the water and this causes an undesirable degrading of the ascorbic acid. In order to reduce this degradation, a water soluble food grade antioxidant is initially added (preferably sulphur dioxide or an antioxidant which produces sulphur dioxide such as sodium metabisulphite) to perform as an oxygen scavenger. The sodium hydroxide solution (or other food grade alkali solution) is added with the purpose of adjusting the pH value and thereby enhancing the stability of the enzyme carrying solution. The necessary dough improving enzymes are then added, followed by a hydrocolloid to thicken the solution, act as a suspending agent and further reduce water activity.

The present invention is not limited to the specific embodiment described above. Alternative arrangements will be apparent to a reader skilled in the art. For example, although ascorbic acid is widely used in dough conditioners and takes the role of an oxidant, other oxidants may be used where food additive legislation permits (for example, in the US). Alternatives to ascorbic acid include potassium bromate, potassium iodate, calcium peroxide, and azodicarbonamide. Also, where food additive legislation permits, alternative antioxidants to those indicated above may be used, for example, L-cysteine hydrochloride.

## Claims

1. A liquid dough conditioning composition comprising one or more enzymes, an oxidant and a water soluble antioxidant; **characterised by** further comprising salt in a quantity of between 30 wt% and 36 wt% or sugar in a quantity of between 40 wt% and 70 wt%, or sugar in a quantity of between 10 wt% and 40 wt% and salt in a quantity of between 10 wt% and 40 wt%.

2. A liquid dough conditioning composition according to claim 1, wherein the composition comprises salt in a quantity of between 30 wt% and 36 wt%.

3. A composition as claimed in claim 1 or 2, **characterised by** a salt content of 36 wt%.

4. A liquid dough conditioning composition according to claim 1, wherein the composition comprises sugar in a quantity of between 40 wt% and 70 wt%.

5. A composition as claimed in claim 4, **characterised by** a sugar content of 60 wt%.

6. A liquid dough composition according to claim 1, wherein the composition comprises sugar in a quantity of between 10 wt% and 40 wt% and salt in a quantity of between 10 wt% and 40 wt%.

7. A composition as claimed in claim 6, **characterised by** a sugar content of 23 wt%, a salt content of 20 wt% and a water content of 57 wt%.

8. A composition as claimed in any of the preceding claims, wherein the water soluble antioxidant is sulphur dioxide or sulphur dioxide generating or is sodium metabisulphite.

9. A composition as claimed in claim 8, **characterised by** a sodium metabisulphite content of up to 1.0 wt%, or of approximately 0.1 wt%.

10. A composition as claimed in any of the preceding claims, further comprising a water soluble alkali, such as sodium hydroxide.

11. A composition as claimed in any of the preceding claims, further comprising soluble means for increasing the viscosity of said composition.

12. A composition as claimed in claim 11, wherein said viscosity increasing means comprises an emulsifier, such as sodium stearoyl lactylate; a polysaccharide such as starch; or a hydrocolloid such as Xanthan gum.

13. A composition as claimed in any of the preceding claims, wherein said one or more enzymes comprises lipase.

14. A composition as claimed in any of the preceding claims, wherein said oxidant is ascorbic acid.

15. A process for preparing a liquid dough conditioning composition comprising one or more enzymes, an oxidant and a water soluble antioxidant, wherein the water soluble antioxidant is added to water before the oxidant is added to said water.

16. A process as claimed in claim 15, wherein said water comprises dissolved sugar and/or dissolved salt.

17. A process as claimed in claim 15, **characterised by** adding salt to said water in a quantity of between 30 wt% and 36 wt%.

18. A process as claimed in claim 17, **characterised by** adding salt to said water in a quantity of 36 wt%.

19. A process as claimed in claim 15, **characterised by** adding sugar to said water in a quantity of 23 wt%, a salt content of 20 wt% and a water content of 57 wt%.

20. A process as claimed in claim 15, **characterised by** adding sugar to said water in a quantity of between 40 wt% and 70 wt%.

21. A process as claimed in claim 20, **characterised by** further adding sugar to said water in a quantity of 60 wt%.

22. A process as claimed in any of claims 15 to 21, wherein, after said water soluble antioxidant is added, a water soluble alkali is added.

23. A process as claimed in claim 22, wherein said alkali is added after said oxidant is added.

24. A process as claimed in claim 22 or 23, wherein said water soluble alkali is added so as to adjust the pH to approximately 3.0 to 8.0, preferably 4.0 to 5.0, and more preferably to 4.5.

25. A process as claimed in any of claims 22 to 24, wherein said water soluble alkali is sodium hydroxide.

26. A process as claimed in any of claims 22 to 25 , wherein, after said water soluble alkali is added, one or more enzymes are added.

27. A process as claimed in claim 26, wherein, after said one or more enzymes are added, a hydrocolloid is added.

28. A process as claimed in any of claims 15 to 27, wherein said oxidant is ascorbic acid.

29. Use of a water soluble antioxidant to stabilise a liquid dough conditioning composition comprising one of more enzymes; an oxidant which is ascorbic acid; salt in a quality of between 30 wt% and 36 wt% or sugar in a quantity of between 40 wt% and 70 wt%, or sugar in a quantity of between 10 wt% and 40 wt% and salt in a quantity of between 10 wt% and 40 wt%.

30. A process for preparing a dough comprising mixing flour, yeast, water and an effective quantity of a composition as claimed in any of claims 1 to 14.

31. A process as claimed in claim 30, comprising the step of adding a fluidised emulsifier to said mix of flour, yeast, water and quantity of composition.

32. Use of a liquid composition as claimed in any of claims 1 to 14 for the preparation of a dough and any product baked therefrom.

## Patentansprüche

1. Flüssige Teigverbesserungszusammensetzung umfassend ein oder mehrere Enzyme, ein Oxidationsmittel und ein wasserlösliches Antioxidationsmittel; **gekennzeichnet durch** weiteres Umfassen von Salz in einer Menge zwischen 30 Gew.-% und 36 Gew.-% oder Zucker in einer Menge zwischen 40 Gew.-% und 70 Gew.-% oder Zucker in einer Menge zwischen 10 Gew.-% und 40 Gew.-% und Salz in einer Menge zwischen 10 Gew.-% und 40 Gew.-%.

2. Flüssige Teigverbesserungszusammensetzung nach Anspruch 1, wobei die Zusammensetzung Salz in einer Menge zwischen 30 Gew.-% und 36 Gew.-% umfasst.

3. Zusammensetzung nach Anspruch 1 oder 2, **gekennzeichnet durch** einen Salzgehalt von 36 Gew.-%.

4. Flüssige Teigverbesserungszusammensetzung nach Anspruch 1, wobei die Zusammensetzung Zucker in einer Menge zwischen 40 Gew.-% und 70 Gew.-% umfasst.

5. Zusammensetzung nach Anspruch 4, **gekennzeichnet durch** einen Zuckergehalt von 60 Gew.-%.

6. Flüssige Teigverbesserungszusammensetzung nach Anspruch 1, wobei die Zusammensetzung Zucker in einer Menge zwischen 10 Gew.-% und 40 Gew.-% und Salz in einer Menge zwischen 10 Gew.-% und 40 Gew.-% umfasst.

7. Zusammensetzung nach Anspruch 6, **gekennzeichnet durch** einen Zuckergehalt von 23 Gew.-%, einen Salzgehalt von 20 Gew.-% und einen Wassergehalt von 57 Gew.-%.

8. Zusammensetzung nach einem der vorhergehenden Ansprüche, wobei das wasserlösliche Antioxidationsmittel Schwefeldioxid oder Schwefeldioxid bildend oder Natriummetabisulfit ist.

9. Zusammensetzung nach Anspruch 8, **gekennzeichnet durch** einen Natriummetabisulfitgehalt von bis zu 1,0 Gew.-% oder von etwa 0,1 Gew.-%.

10. Zusammensetzung nach einem der vorhergehenden Ansprüche, des Weiteren ein wasserlösliches Alkali wie Natriumhydroxid umfassend.

11. Zusammensetzung nach einem der vorhergehenden Ansprüche, de Weiteren lösliche Mittel zum erhöhen der Viskosität der Zusammensetzung umfassend.

12. Zusammensetzung nach Anspruch 11, wobei das die Viskosität erhöhende Mittel einen Emulgator wie Natriumstearoyllactylat; ein Polysaccharid wie Stärke; oder ein Hydrokolloid wie Xanthangummi umfasst.

13. Zusammensetzung nach einem der vorhergehenden Ansprüche, wobei das eine oder die mehreren Enzyme Lipase umfassen.

14. Zusammensetzung nach einem der vorhergehenden Ansprüche, wobei das Oxidationsmittel Ascorbinsäure ist.

15. Verfahren zum Herstellen einer flüssigen Teigverbesserungszusammensetzung umfassend ein oder mehrere Enzyme, ein Oxidationsmittel und ein wasserlösliches Antioxidationsmittel, wobei das wasserlösliche Antioxidationsmittel dem Wasser hinzugesetzt wird, bevor das Oxidationsmittel dem Wasser hinzugesetzt wird.

16. Verfahren nach Anspruch 15, wobei das Wasser gelösten Zucker und/oder gelöstes Salz umfasst.

17. Verfahren nach Anspruch 15, **gekennzeichnet durch** Hinzusetzen von Salz zu dem Wasser in einer Menge zwischen 30 Gew.-% und 36 Gew.-%.

18. Verfahren nach Anspruch 17, **gekennzeichnet durch** Hinzusetzen von Salz zu dem Wasser in einer Menge von 36 Gew.-%.

19. Verfahren nach Anspruch 15, **gekennzeichnet durch** Hinzusetzen von Zucker zu dem Wasser in einer Menge von 23 Gew.-%, einen Salzgehalt von 20 Gew.-% und einen Wassergehalt von 57 Gew.-%.

20. Verfahren nach Anspruch 15, **gekennzeichnet durch** Hinzusetzen von Zucker zu dem Wasser in einer Menge zwischen 40 Gew.-% und 70 Gew.-%.

21. Verfahren nach Anspruch 20, **gekennzeichnet durch** das weitere Hinzusetzen von Zucker zu dem Wasser in einer Menge von 60 Gew.-%.

22. Verfahren nach einem der Ansprüche 15 bis 21, wobei nach Hinzusetzen des wasserlöslichen Antioxidationsmittels ein wasserlösliches Alkali hinzugesetzt wird.

23. Verfahren nach Anspruch 22, wobei das Alkali nach Hinzusetzen des Oxidationsmittels hinzugesetzt wird.

24. Verfahren nach Anspruch 22 oder 23, wobei das wasserlösliche Alkali hinzugesetzt wird, um den pH-Wert auf etwa 3,0 bis 8,0, bevorzugt 4,0 bis 5,0 und noch bevorzugter auf 4,5 einzustellen.

25. Verfahren nach einem der Ansprüche 22 bis 24, wobei das wasserlösliche Alkali Natriumhydroxid ist.

26. Verfahren nach einem der Ansprüche 22 bis 25, wobei nach Hinzusetzen des wasserlöslichen Alkalis ein oder mehrere Enzyme hinzugesetzt werden.

27. Verfahren nach Anspruch 26, wobei nach Hinzusetzen von einem oder mehreren Enzymen ein Hydrokolloid hinzugesetzt wird.

28. Verfahren nach einem der Ansprüche 15 bis 27, wobei das Oxidationsmittel Ascorbinsäure ist.

29. Verwendung eines wasserlöslichen Antioxidationsmittels zum Stabilisieren einer flüssigen Teigverbesserungszusammensetzung umfassend ein oder mehrere Enzyme; ein Oxidationsmittel, das Ascorbinsäure ist; Salz in einer Menge zwischen 30 Gew.-% und 36 Gew.-% oder Zucker in einer Menge zwischen 40 Gew.-% und 70 Gew.-% oder Zucker in einer Menge zwischen 10 Gew.-% und 40 Gew.-% und Salz in einer Menge zwischen 10 Gew.-% und 40 Gew.-%.

30. Verfahren zum Herstellen eines Teigs, umfassend das Mischen von Mehl, Hefe, Wasser und einer wirksamen Menge einer Zusammensetzung nach einem der Ansprüche 1 bis 14.

31. Verfahren nach Anspruch 30, umfassend den Schritt des Hinzusetzens eines fluidisierten Emulgators zu der Mischung von Mehl, Hefe, Wasser und Zusammensetzungsmenge.

32. Verwendung einer flüssigen Zusammensetzung nach einem der Ansprüche 1 bis 14 für die Herstellung eines Teigs und irgendeines daraus gebackenen Produkts.

## Revendications

1. Composition liquide de conditionnement de pâte comprenant une ou plusieurs enzymes, un oxydant et un antioxydant hydrosoluble ; **caractérisée en ce qu'**elle comprend en outre du sel en une quantité comprise entre 30 % en poids et 36 % en poids ou du sucre en une quantité comprise entre 40 % en poids et 70 % en poids, ou du sucre en une quantité comprise entre 10 % en poids et 40 % en poids et du sel en une quantité comprise entre 10 % en poids et 40 % en poids.

2. Composition liquide de conditionnement de pâte selon la revendication 1, la composition comprenant du sel en une quantité comprise entre 30 % en poids et 36 % en poids.

3. Composition selon la revendication 1 ou 2, **caractérisée par** une teneur en sel de 36 % en poids.

4. Composition liquide de conditionnement de pâte selon la revendication 1, la composition comprenant du sucre en une quantité comprise entre 40 % en poids et 70 % en poids.

5. Composition selon la revendication 4, **caractérisée par** une teneur en sucre de 60 % en poids.

6. Composition liquide de conditionnement de pâte selon la revendication 1, la composition comprenant du sucre en une quantité comprise entre 10 % en poids et 40 % en poids et du sel en une quantité comprise entre 10 % en poids et 40 % en poids.

7. Composition selon la revendication 6, **caractérisée par** une teneur en sucre de 23 % en poids, une teneur en sel de 20 % en poids et une teneur en eau de 57 % en poids.

8. Composition selon l'une quelconque des revendications précédentes, dans laquelle l'antioxydant hydrosoluble est le dioxyde de soufre ou un composé produisant du dioxyde de soufre ou est le métabisulfite de sodium.

9. Composition selon la revendication 8, **caractérisée par** une teneur en métabisulfite de sodium allant jusqu'à 1,0 % en poids, ou d'à peu près 0,1 % en poids.

10. Composition selon l'une quelconque des revendications précédentes, comprenant en outre un alcali hydrosoluble, tel que l'hydroxyde de sodium.

11. Composition selon l'une quelconque des revendications précédentes, comprenant en outre un moyen soluble pour augmenter la viscosité de ladite composition.

12. Composition selon la revendication 11, dans laquelle ledit moyen augmentant la viscosité comprend un émulsifiant, tel que le stéaroyllactate de sodium ; un polysaccharide tel que l'amidon ; ou un hydrocolloïde tel que la gomme xanthane.

13. Composition selon l'une quelconque des revendications précédentes, dans laquelle lesdites une ou plusieurs enzymes comprennent une lipase.

14. Composition selon l'une quelconque des revendications précédentes, dans laquelle ledit oxydant est l'acide ascorbique.

15. Procédé pour la préparation d'une composition liquide de conditionnement de pâte comprenant une ou plusieurs enzymes, un oxydant et un antioxydant hydrosoluble, dans lequel l'antioxydant hydrosoluble est ajouté à de l'eau avant l'ajout de l'oxydant à ladite eau.

16. Procédé selon la revendication 15, dans lequel ladite eau comprend du sucre dissous et/ou du sel dissous.

17. Procédé selon la revendication 15, **caractérisé par** l'ajout de sel à ladite eau en une quantité comprise entre 30 % en poids et 36 % en poids.

18. Procédé selon la revendication 17, **caractérisé par** l'ajout de sel à ladite eau en une quantité de 36 % en poids.

19. Procédé selon la revendication 15, **caractérisé par** l'ajout de sucre à ladite eau en une quantité de 23 % en poids, une teneur en sel de 20 % en poids et une teneur en eau de 57 % en poids.

20. Procédé selon la revendication 15, **caractérisé par** l'ajout de sucre à ladite eau en une quantité comprise entre 40 % en poids et 70 % en poids.

21. Procédé selon la revendication 20, **caractérisé par** l'ajout en outre de sucre à ladite eau en une quantité de 60 % en poids.

22. Procédé selon l'une quelconque des revendications 15 à 21, dans lequel,après l'ajout dudit antioxydant hydrosoluble, un alcali hydrosoluble est ajouté.

23. Procédé selon la revendication 22, dans lequel ledit alcali est ajouté après l'ajout dudit oxydant.

24. Procédé selon la revendication 22 ou 23, dans lequel ledit alcali hydrosoluble est ajouté afin d'ajuster le pH à peu près à une valeur de 3,0 à 8,0, de préférence à une valeur de 4,0 à 5,0 et de façon davantage préférable à 4,5.

25. Procédé selon l'une quelconque des revendications 22 à 24, dans lequel ledit alcali hydrosoluble est l'hydroxyde de sodium.

26. Procédé selon l'une quelconque des revendications 22 à 25, dans lequel, après l'ajout dudit alcali hydrosoluble, une ou plusieurs enzymes sont ajoutées.

27. Procédé selon la revendication 26, dans lequel, après l'ajout desdites une ou plusieurs enzymes, un hydrocolloïde est ajouté.

28. Procédé selon l'une quelconque des revendications 15 à 27, dans lequel ledit oxydant est l'acide ascorbique.

29. Utilisation d'un antioxydant hydrosoluble pour stabiliser une composition liquide de conditionnement de pâte comprenant une ou plusieurs enzymes ; un oxydant qui est l'acide ascorbique ; du sel en une quantité comprise entre 30 % en poids et 36 % en poids ou du sucre en une quantité comprise entre 40 % en poids et 70 % en poids, ou du sucre en une quantité comprise entre 10 % en poids et 40 % en poids et du sel en une quantité comprise entre 10 % en poids et 40 % en poids.

30. Procédé pour la préparation d'une pâte comprenant le mélange de farine, de levure, d'eau et d'une quantité efficace d'une composition selon l'une quelconque des revendications 1 à 14.

31. Procédé selon la revendication 30, comprenant l'étape consistant à ajouter un émulsifiant fluidisé audit mélange de farine, de levure, d'eau et de quantité de composition.

32. Utilisation d'une composition liquide selon l'une quelconque des revendications 1 à 14 pour la préparation d'une pâte et de n'importe quel produit cuit à partir de celle-ci.
